# EUROPEAN PATENT SPECIFICATION

(11) **EP 1 278 808 B1**
(45) Date of publication and mention of the grant of the patent: **20.10.2004**
(21) Application number: 01930588.7
(22) Date of filing: 18.04.2001
(51) Int. Cl.: C09J 7/02, C08J 7/04

(54) **ADHESIVE SHEET AND ADHESION STRUCTURE**
KLEBEFILM UND KLEBESTRUKTUR
FEUILLE ADHESIVE ET STRUCTURE D'ADHESION

(30) Priority: 02.05.2000 JP 2000138240
(43) Date of publication of application: 29.01.2003
(73) Proprietor: 3M Innovative Properties Company, St. Paul, MN 55133-3427 (US)
(72) Inventor: SAITOH, Tsuneyoshi, Saint Paul, MN 55133-3427 (US)
(74) Representative: VOSSIUS & PARTNER
(86) International application number: PCT/US2001/012714
(87) International publication number: WO 2001/083633

(56) References cited:
- EP-A- 0 467 570
- WO-A-01/18139

## Description

### Technical Field of the Invention

The present invention relates to an adhesive sheet, which is bonded with adherends for outdoor use, for example, walls and window glasses of buildings, and bodies of vehicles, aircrafts and marine structures. More particularly, the present invention relates to an adhesive sheet comprising a protective layer, which has improved stain resistance of the surface of the adhesive sheet and improved lamination characteristics, i.e. properties wherein another sheet is hardly peeled off for a long period of time in case where another adhesive sheet is laminated on the surface of the adhesive sheet.

### Background

In adhesive sheets such as film or sheet with a general outdoor adhesive, a protective layer is usually disposed on the surface to improve the stain resistance of the surface. This protective layer is usually a coated film containing an acrylic resin or a fluorine copolymer. A coating composition capable of forming such a coated film is also commercially available.

However, in the protective layer formed of the commercially available coated film, the contact angle between the surface and water is comparatively large (usually 70 degree of more) and the hydrophobicity is comparatively superior. In case where a contaminant is, for example, sludge, dust, or raindrops stain, water droplets are liable to roll down because the surface of the protective layer has large contact angle to water and is hydrophobic. On the other hand, the contaminant is adhered on the dry mark of water droplets left on the surface to form dot-like stain. Furthermore, once adhered contaminant is hardly removed by a natural washing action such as rainfall because of low hydrophilicity of the surface. There is a problem that, when the contaminant is a lipophilic substance such as waste gas or smoke, the lipophilic contaminant is liable to be adhered because the surface of the protective layer has comparatively superior lipophilicity.

To solve the problems described above, the present inventors have studied to use a coated film containing a hydrophilizing agent (also referred to as an "agent for imparting hydrophilicity"). Such a coated film is disclosed in some documents listed hereinafter.

For example, Japanese Unexamined Patent Publication (Kokai) No. 8-337771 discloses that a decomposable agent for imparting hydrophilicity is contained as a stain adhesion inhibitor. The agent for imparting hydrophilicity is capable of imparting the hydrophilicity to the surface of the coated film by generating hydrophilic chemical species due to chemical composition. Accordingly, in the coated film formed by using such a coating composition, the contact angle between the surface and water can be adjusted to 70 degree or less. When the contact angle between the surface of the coated film and water is sufficiently small, the lipophilic contaminant is hardly adhered. On the other hand, since the surface of the coated film is easily wetted with water, the lipophilic contaminant is easily removed by natural washing with rain, or artificial washing. Accordingly, the hydrophilicity and stain resistance to a hydrophilic contaminant can also be improved.

As is disclosed in Japanese Unexamined Patent Publication (Kokai) No. 11-267585, there is also known a clear coat coating composition comprising (A) 30 to 90 wt% of a resin component, (B) 10 to 70 wt% of a curing agent component, and (C) 1 to 50 wt% of a hydrophilizing agent. As the hydrophilizing agent as the component (C), for example, organisilicate, organosilicate condensate and inorganic oxide sol (e.g. aluminum oxide sol, silicon oxide sol, zirconium oxide sol, antimony oxide sol, etc.) are disclosed. This clear coat coating composition can impart improved stain resistance, stain removability, weathering resistance, chemical resistance, moisture resistance, and coating appearance to articles to be coated, such as vehicle bodies and traffic-control signs. Such a stain-resistant coating composition is also disclosed in Unexamined Patent Publication (Kokai) No. 9-302257.

U.S. Patent No. 5,820,978 discloses an article (e.g. reflective sheet) comprising a water-spreading layer as a surface protective layer, the water-spreading layer containing a silicon oxide compound having a metallic oxide film on the surface. The metal of the metallic oxide film is preferably selected from the group consisting of aluminum, gallium, germanium, tin, indium, arsenic, antimony, and vanadium.

### Summary of the Invention

The present invention is directed to an adhesive sheet comprising a flexible substrate, an adhesive layer disposed on the back surface of said flexible substrate, and a protective layer disposed on the surface of said flexible substrate, characterized in that:
said protective layer contains (1) a cured resin, and (2) a hydrophilizing agent of an inorganic oxide, an organosilicate compound or a mixture thereof; and that the thickness of said protective layer is from 0.1 to 60 µm and the contact angle between the surface of said protective layer and water is from 35 to 65 degree.

The adhesive sheet of the present invention provides a protection effect such as stain resistance due to the hydrophilizing agent because the protective layer contains an inorganic oxide, an organosilicate compound, or a mixture thereof. Furthermore, the hydrophilicity of the surface of the protective layer is properly maintained because the protective layer contains a combination of the hydrophilizing agent and cured resin and the contact angle between the surface of the protective layer and water is adjusted to a range from 35 to 65 degree, thereby making it possible to prevent lowering of the water-resistant adhesive strength of the second adhesive sheet in case where the adhesive sheet of the present invention is used as the first adhesive sheet for directly coating the adherend and the surface of the first adhesive sheet is covered with a second adhesive sheet.

### Brief Description of the Drawings

Fig. 1 is a sectional view showing the constitution of the adhesive sheet of the present invention.
Fig. 2 is a sectional view showing the constitution of the adhesion structure of the present invention.

### Description of Reference Numerals

1: adhesive sheet
2, 7: flexible substrate
3, 8: adhesive layer
4, 9: protective layer
5: adhesion structure
6: second adhesive sheet
10: adherend

### Detailed Description

It has been found as a result of the present inventors' study that the hydrophilized coated film disclosed in the above publication provides good protection effect (such as stain resistance, stain removability, and weathering resistance), but has the following problems when using it as the protective layer of the adhesive sheet.

A second adhesive sheet is often appllied to a first adhesive sheet, which in turn is bonded onto the surface of an outdoor adherend, such as wall surfaces of buildings and signboards. In such a case, a first adhesive sheet as a substrate is bonded onto the surface of a signboard, and then a second adhesive sheet cut into a shape of designs or literatures is bonded thereon thereby to coat (decorate) the surface of the first adhesive sheet. At this time, since the whole surface of the first adhesive sheet is not covered with the second adhesive sheet even after the second adhesive sheet is bonded, a protective layer (hydrophilized layer) containing a hydrophilizing agent is preferably disposed on the surface of the first adhesive sheet. The second adhesive sheet to be contact with the hydrophilized layer can be bonded with a sufficient adhesive strength in a usual state, however, an adhesive strength (peel resistance) between the surface of the protective layer (hydrophilized layer) of the first adhesive sheet and the second adhesive sheet, that is, a water-resistant adhesive strength is likely to be lowered on exposure to water, such as rain, for a long time.

It is, therefore, an object of the present invention to provide an adhesive sheet, which is provided with an excellent protection effect and can effectively prevent lowering of the water-resistant adhesive strength on covering of the surface of a first adhesive sheet with another adhesive sheet (second adhesive sheet).

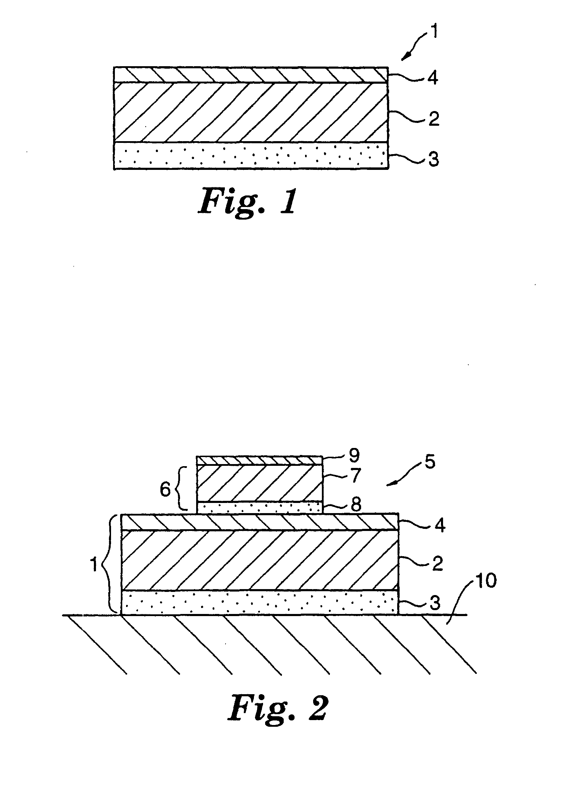

Fig. 1 is a sectional view showing one preferred embodiment of the adhesive sheet of the present invention. The adhesive sheet 1 of the present invention comprises a flexible substrate 2, an adhesive layer 3 disposed on the back surface of the flexible substrate 2, and a protective layer 4 disposed on the surface of the flexible substrate 2. The respective constituent components will be described below.

As the flexible substrate 2 used in the adhesive sheet according to the present invention, there can be used those used in a conventional adhesive sheet. For example, a vinyl chloride film is preferred in view of the processability, applicability, weathering resistance, and cost. In addition to vinyl chloride, there can be used acrylic resin, polyolefin resin, polyester resin, and polyurethane resin. Colorants such as pigments, ultraviolet absorbers for improving the weathering resistance, thermal stabilizers, and plasticizers for imparting the flexibility can be added in the resin. A sheet having high reflectivity can be used as the substrate thereby to enhance the visibility in the nighttime. An adhesive sheet including such a sheet having high reflectivity in the nighttime is useful for formation of a traffic-control sign.

The thickness of the substrate is not specifically limited as far as it can maintain the pliability, and is usually from 10 to 2,000 µm, and preferably from 20 to 1,000 µm.

As the adhesive layer 3 disposed on the back surface of the flexible substrate 2, there can be used those used in a conventional adhesive sheet. It is usually a layer containing adhesives such as pressure-sensitive adhesive (adhesive), heat-sensitive adhesive (including hot-melt adhesive), or solvent active type adhesive. In view of the processability, applicability, weathering resistance and cost, an acrylic adhesive is preferably used as the adhesive. Ultraviolet absorbers for improving the weathering resistance and thermal stabilizers can be added in the adhesive layer. To improve the adhesive strength, crosslinking agents (curing agents), tackifiers and plasticizers can also be added. An adhesive having a peel strength (180 degree peel) of 5 to 50 N/25 mm is preferred, considering application to the adherend whose surface has some strain and the adherend that requires conformability.

As the adhesive, for example, polyolefinic, polyester, polyurethane, silicone (including modified silicone such as silicone polyurea) and epoxy adhesives can also be used, in addition to the acrylic adhesive. The adhesive layer can be formed from a coated film of a coating solution containing the adhesive. The thickness of the adhesive layer is not specifically limited, but is usually from 5 to 500 µm, and preferably from 10 to 300 µm.

The protective layer 4 of the adhesive sheet of the present invention is characterized in that it contains a cured resin formed from a curable polymer and a hydrophilizing agent made of an inorganic oxide, the thickness of the protective layer being from 0.1 to 60 µm, the contact angle between the surface of the protective layer and water being from 35 to 65 degrees.

The inorganic oxide constituting the hydrophilizing agent includes various oxygen-containing metallic compounds wherein metallic elements form a three-dimensional network through a bond with oxygen atoms. The metallic element constituting the organic oxide is preferably metal selected from the Group II-VI elements in the Periodic Table of the Elements, and particularly preferably aluminum, silicon, zirconium, or antimony. Among these inorganic oxides, an oxide of silicon, i.e. silicon oxide is most preferred. The inorganic oxide is preferably used as a sol. Because the sol of the inorganic oxide is generally superior in dispersibility and is easily mixed with the resin constituting the protective layer.

The inorganic oxide may be those whose surface are treated with a silane coupling agent. The dispersibility of the inorganic oxide in the protective layer is improved by subjecting to this surface treatment. As the silane coupling agent, for example, there can be used vinyltrimethoxysilane, vinyltriethoxysilane, γ-methacryloylpropyltrimethoxysilane,γ-grycidoxypropyltrimethoxysilane,γ-aminopropyltrimethoxysilane, methyltrimethoxysilane, methyltriethoxysilane, dimethyldimethoxysilane, diphenyldimethoxysilane, and phenyltrimethoxysilane.

As the hydrophilizing agent, for example, an organosilane compound can also be used. The organosilane compound means an oxide silicate having an organic substituent. The organosilane compound includes, for example, a compound represented by the following formula:

(R¹)ₙ-Si-(OR²)₄₋ₙ

(wherein R¹ and R² each independently represents a hydrogen atom, an alkyl group having 1 to 10 carbon atoms, a cycloalkyl group, an aralkyl group, or an aryl group having 6 to 10 carbon atoms: and n is 0 or 1) or a condensate thereof. Specific examples of the organosilane compound include tetrahydroxysilane, tetramethoxysilane, tetraethoxysilane, tetrapropoxysilane, tetrabuthoxysilane, tetraphenoxysilane, dimethoxydicthoxysilane, methyltrimethoxysilane, methyltriethoxysilane, phenyltrimethoxysilane, phenyltriethoxysilane, butyltrimethoxysilane, hexyltrimethoxysilane, decyltriethoxysilane, ethoxytrimethoxysilane, propoxytrimctoxysilane, and butoxytrimethoxysilane.

The organosilane compound may be those wherein the organic polymer is linked to the silicon oxide. The dispersibility of the silicon oxide in the protective layer and the affinity with the cured resin are improved by linking the organic polymer to the silicon oxide, and the organic polymer can serve as a binder with the cured resin. The organic polymer preferably contains at least one of a perfluoroalkyl group and a silicone group. Specific examples of the perfluoroalkyl group include perfluoromethyl group, perfluoroethyl group, perfluoropropyl group, perfluorobutyl group, perfluorohexyl group, perfluorooctyl group, perfluorodecyl group, and perfluorotetradecyl group. Specific examples of the silicone group include dimethylsilicone group, diphenylsilicone group, methylphenylsilicone group, diethylsilicone group, and methylethylsilicone group. These perfluoroalkyl group and silicone group may be respectively used alone, or two or more kinds of them may be used in combination. Specific examples of the organic polymer having these groups include acrylic resin, polystyrene, polyvinyl acetate, polyolefin (e.g. polyethylene, polypropylene, etc.), polyvinyl chloride, polyvinylidene chloride, polyester, and copolymers thereof, and modified polymers thereof. The perfluoroalkyl group and silicone group may be directly linked to the organic polymer, or may be linked through an ester group or an ether group.

The organic polymer can be linked to the silicon oxide by mixing with the silicon oxide, followed by hydrolysis and further condensation. The organic polymer may be included in particles of the silicon oxide. The content of the organic polymer is not specifically limited, but is preferably from 50 to 0.5 wt% based on 50 to 99.5 wt% of the silicon oxide, in order to exert the effect of the silicon oxide, for example, enhancement of the hydrophilicity of the surface of the protective layer.

The average particle diameter of the inorganic oxide or organosilane compound constituting the hydrophilizing agent is not specifically limited, but is preferably 100 nm or less so as not to impair the transparency of the protective layer, and preferably 5 nm or more to prevent aggregation.

As the hydrophilizing agent, an organosilane compound is more preferable. This is because the organosilane compound can increase the protective effect as described above and can effectively prevent lowering of the water-resistant adhesive strength of the second adhesive sheet in case where the surface of the first adhesive sheet of the present invention is covered with the second sheet. This effect is explained as follows. The hydrophilizing agent can effectively enhance the hydrophilicity of the surface of the sheet (protective layer), and can effectively prevent that water penetrated into the interface between the surface of the protective layer and the adhesive layer of the second adhesive layer bonded on the surface thereof forms a ununiform water membrane that accelerates peel of the second adhesive sheet. Organosilane compound is effective in this effect. In addition, organosilane compound has very low catalitic effect which chemically degradate an adhesive included in the second adhesive layer, and has high affinity for an organic material. Thus, organosilane compound can prevent peel of the second adhesive sheet and effectively enhance the water-resistant adhesive strength of the second adhesive sheet. More preferable organosilane compound is silane coupling agent (silicon oxide surface treating agent) supported on the surface of an inorganic oxide such as silica sol, or silica sol in which the surface is covered with an organic polymer. The average particle size of the sol is typically no more than 100 nm.

The content of the hydrophilizing agent in the protective layer is selected so as to control the contact angle between the surface of the protective layer and water from 35 to 65 degrees and varies depending on the kind of the hydrophilizing agent and cured resin to be used. The hydrophilizing agent is usually contained in the amount from 1 to 50 parts by weight, preferably from 3 to 40 parts by weight, and particularly preferably from 5 to 30 parts by weight, based on 100 parts by weight of the cured resin. When the amount of the hydrophilizing agent is too small, the contact angle between the surface of the protective layer and water exceeds a predetermined range and the protection effect such as stain resistance is likely to be lowered. On the other hand, when the amount is too large, the contact angle between the surface of the protective layer and water is smaller than a predetermined range and the water-resistant adhesive strength of the second adhesive sheet is likely to be lowered. Although the cured resin is described in detail below, it is a resin containing a cured polymer formed from a curable polymer. In case where a curing agent is added to cure the curable polymer, the cured resin means a mixture of the polymer and the curing agent.

The curable polymer constituting the cured resin of the protective layer is preferably a non-fluorine polymer. Because the non-fluorine polymer has an action of enhancing the water-resistant adhesive strength of the second adhesive sheet. As the non-fluorine polymer, for example, there can be used acrylic, polyolefinic, polyester, polyurethane, and silicone (including modified silicone such as silicone polyurea) polymers. An acrylic polymer is preferred. It is particularly useful for forming the adhesion structure to use the acrylic polymer as the non-fluorine polymer of the protective layer of the first adhesive sheet in case where the second adhesive sheet for coating the surface of the first adhesive sheet has an adhesive layer containing an adhesive.

The acrylic polymer constituting the cured resin of the protective layer is preferably a (meth)acrylate homopolymer or a (meth)acrylate copolymer containing other polymerization units. Other polymerization units are preferably those having a functional group capable of reacting the curing agent, for example, hydroxyl group, carboxyl group, epoxy group, and amino group. Specific examples of the acrylic polymer include acrylic polyol.

When the cured resin contains a curable polymer and a curing agent, the curing agent is not specifically limited, but is preferably an isocyanate compound or an epoxy compound. With respect to a ratio of the curable polymer to the curing agent, the content of the curable polymer is from 40 to 95 parts by weight, whereas, the content of the curing agent is from 5 to 60 parts by weight. Preferably, the content of the curable polymer is from 30 to 90 parts by weight, whereas, the content of the curing agent is from 10 to 70 parts by weight.

For the purpose of improving the weathering resistance, stability and other performances, ultraviolet absorbers, stabilizers and other additives can also be added to the protective layer, in addition to the above components. The method of forming the protective layer is not specifically limited, but is formed by coating a coating solution prepared by dissolving and dispersing all components such as inorganic oxide, curable polymer and curing agent in a solvent, and curing the curable polymer.

The thickness of the protective layer is usually from 0.1 to 60 µm. When the thickness of the protective layer is too small, the adhesion between the protective layer and substrate and the strength of the protective layer are likely to be lowered. On the other hand, when the thickness of the protective layer is to large, the pliability and elongation of the whole adhesive sheet are lowered and there is a fear that it becomes difficult to apply it to the adherend whose surface has some strain and the adherend requiring the conformability. From these points of view, the thickness of the protective layer is preferably from 0.5 to 40 µm, and particularly preferably from 1 to 20 µm.

The method of forming the protective layer is not specifically limited, but is formed by coating a coating solution, prepared by dissolving and dispersing the hydrophilizing agent, curable polymer and curing agent in a solvent, on the surface of a pliable substrate, followed by the curing reaction and further drying. It is preferable that the condition for this drying is relatively mild. It is preferable that the drying is carried out for 3 to 60 minutes at a temperature of 50 to 90°C.

As described above, the hydrophilizing agent effectively enhance the hydrophilicity of the surface of the protective layer of the adhesive sheet, thereby improving the stain resistance to contaminants. However, it is difficult to properly control the hydrophilicity of the surface of the protective layer by using only the hydrophilizing agent, resulting in excess hydrophilicity. Therefore, when the surface of the protective layer is provided with the second adhesive sheet, water penetrated into the interface between the surface of the protective layer and the adhesive layer of the second adhesive layer bonded on the surface thereof forms a ununiform water membrane that accelerates peel of the second adhesive sheet, thereby lowering the water-resistant adhesive strength of the second adhesive sheet, resulting in peel of the second adhesive sheet. Therefore, when using a combination of the hydrophilizing agent and cured resin in the protective layer, the hydrophilicity of the surface of the protective layer can be easily controlled within a range where lowering of the water-resistant adhesive strength of the second adhesive sheet is prevented, while maintaining the stain resistance. The range of the hydrophilicity corresponds to the contact angle to water from 35 to 65 degrees. When the contact angle between the surface of the protective layer and water is 65 degrees or less, the stain resistance can be exerted and maintained for a long period of time. On the other hand, when the contact angle between the surface of the protective layer and water is 35 degree or more, lowering of the water-resistant adhesive strength of the second adhesive sheet can be prevented without causing excess hydrophilicity of the surface of the protective layer. To further enhance the stain resistance and effect of preventing lowering of the water-resistant adhesive strength of the second adhesive sheet in good balance, the contact angle between the surface of the protective layer and water is preferably from 40 to 64 degree, and more preferably from 45 to 63 degree. The contact angle to water after 1,000 hours have passed since the beginning of an accelerated exposure test using a sunshine weatherometer (WOM) is preferably within the above range, in addition to the initial value of the contact angle to water within the above range. In the present specification, the contact angle to water is a value measured by using a conventional contact angle meter, and the accelerated exposure test was conducted in accordance with JIS A 1415 (accelerated exposure test of plastic building materials).

Fig. 2 is a sectional view showing one preferred embodiment of the adhesion structure of the present invention. An adhesion structure 5 according to the present invention comprises a first adhesive sheet 1 comprising the above adhesive sheet with which the surface of an adherend 10 is covered, and a second adhesive sheet 6 with which the surface of the first adhesive sheet, i.e. the surface of the protective layer 4 is partially covered. As described above, regarding the protective layer 4 of the first adhesive sheet 1, the stain resistance and the effect of preventing lowering of the water-resistant adhesive strength of the second adhesive sheet 6 are enhanced in good balance. Accordingly, the surface of the protective layer that is not covered with the second adhesive sheet 6 can maintain the stain resistance for a long period of time. Therefore, the adhesive sheet according to the present invention can be preferably used as an outdoor adhesive sheet. On the other hand, regarding the adhesion structure 5 formed by covering with the second adhesive sheet 6, lowering of the water-resistant adhesive strength between the protective layer 4 of the first adhesive sheet 1 and an adhesive layer 8 of the second adhesive sheet 6 is effectively prevented and peel of the second adhesive sheet 6 can be effectively prevented.

The second adhesive sheet 6 can be produced in the same manner as in case of the first adhesive sheet, and usually comprises a pliable substrate 7 and an adhesive layer 8 disposed on the back surface of the pliable substrate 7. A protective layer 9 is preferably disposed on the surface of the pliable substrate 7. The protective layer 9 of the second adhesive sheet 6 is not specifically limited as far as another third adhesive sheet is bonded onto the surface of the second adhesive sheet. As a matter of course, the same protective layer as in case of the adhesive sheet according to the present invention can also be provided.

In the same manner as in case of the flexible substrate 2 in the first adhesive sheet, a resin film formed from vinyl chloride, acrylic resin, polyolefin resin, polyester resin, or polyurethane resin can be used in the flexible substrate 7 in the second adhesive sheet. A sheet having high reflectivity such as retroreflective sheet can also be used as the flexible substrate 7. The thickness of the flexible substrate 7 is not specifically limited as far as it can maintain the flexibility, but is usually from 10 to 2,000 µm, and preferably from 20 to 1,000 µm.

The adhesive layer 8 to be disposed on the back surface of the flexible substrate 7 of the second adhesive sheet 6 may be those capable of bonding with the protective layer 4 of the first adhesive sheet 1, and is usually a layer containing adhesives such as pressure-sensitive adhesive (adhesive), heat-sensitive adhesive (including hot-melt adhesive), or solvent active type adhesive. As the adhesive, there can be used acrylic, polyolefinic, polyester, polyurethane, silicone (including modified silicone such as silicaone polyurea) and epoxy adhesives. The adhesive layer 8 can be formed from a coated film containing an adhesive. The thickness of the adhesive layer 8 is not specifically limited, but is usually from 5 to 500 µm, and preferably from 10 to 300 µm. Ultraviolet absorbers, thermal stabilizers, crosslinking agents (curing agents), tackifiers and plasticizers can be added in the adhesive of the second adhesive sheet.

Preferred combination of the adhesive layer 8 of the second adhesive sheet 6 and the cured resin in the protective layer 4 of the first adhesive sheet is as follows. For example, when the protective layer 4 of the first adhesive sheet contains an acrylic polymer, the adhesive layer 8 of the second adhesive sheet preferably contains an acrylic adhesive. This combination is one of best combinations capable of effectively preventing peel of the second adhesive sheet from the surface of the first adhesive sheet.

### Examples

### Example 1

First, a coating solution for protective layer was prepared according to the following formulation.

Hydrophilizing coating composition manufactured by NIPPON YUSHI Co., Ltd. under the trade mark of BELL CLEAN CLEAR No. 5000: 80 wt%

Curing agent manufactured by NIPPO YUSHI Co., Ltd. under the trade mark of BELL CLEAN CURING AGENT: 20 wt%

The hydrophilizing coating composition was a coating composition whose involatile content is 46 wt%, comprising a hydrophilizing agent made of an organosilicate compound and an acrylic polyol resin. The curing agent was a liquid containing 65 wt% of an isocyanate compound as an involatile content.

The above two materials were uniformly mixed to form a coating solution, and then the surface of a substrate of an adhesive sheet manufactured by SUMITOMO 3M Co., Ltd under the trade mark of SCOTCHCAL FILM, Product No. 3650CF, was coated with the coating solution in a dry thickness of 3 µm to form a protective layer, thus obtaining an adhesive sheet of this example. The protective layer was dried under the conditions of 65°C for ten minutes. The substrate of the adhesive sheet was a vinyl chloride resin film and the adhesive layer contained an acrylic adhesive.

The adhesive sheet of this example was evaluated in the following procedure. The results are shown in Table 1.

### (Evaluation procedure)

Stain resistance: The adhesive sheet was allowed to stand outdoors and the stained state after a lapse of four months was visually observed. An adhesive sheet which was allowed to stand indoors was used for comparison. Samples where stain was hardly observed were rated " 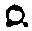 (Excellent)", samples where stain was observed but could be easily removed by rubbing were rated "○ (Good)", and samples where stain that can not be easily removed was observed were rated "×(NG)", respectively.

Contact angle to water: After water droplets were dropped on the surface of the protective layer of the adhesive sheet, the contact angle between the surface of the protective layer and water was measured by using a contact angle meter, Model CA-Z, manufactured by KYOWA KAIMEN KAGAKU Co., Ltd. in accordance with the procedure described in the manual. Purified water obtained by distilling deionized water was used as water. The initial value is a value measured with respect to the unused adhesive sheet, while the value after WOM 1000 hours is a value measured after 1000 hours have passed since the beginning of an accelerated exposure test using a sunshine weatherometer in accordance with JIS.

Lamination adhesive strength (ordinary state): Using the adhesive sheet of this example as the first adhesive sheet and SCOTCHCAL FILM, Product No. 3650CF, as the second adhesive sheet, two sheets were laminated with each other and the resultant was allowed to stand at 20°C for 48 hours to give a sample for measurement. A multi-layer sheet of 25 mm in width was made from this sample for measurement and then a peel strength was measured when the second adhesive sheet is peeled off from the surface of the protective layer of the first adhesive sheet by stretching the sample at a stretching rate of 30 cm/minutes. The resulting peel strength was taken as a lamination adhesive strength.

Water-resistant adhesive strength: In the same manner as in case of the measurement of the lamination adhesive strength (ordinary state), except that the multi-layer sheet made in the same manner as in case of the lamination adhesive strength (ordinary state) was dipped in hot water at 40°C for one week and was taken as the sample for measurement, the peel strength was measured. The resulting peel strength was taken as a water-resistance adhesive strength.

### Comparative Example 1

In the same manner as in Example 1, except that the coating composition for protective layer was prepared by mixing the following materials, an adhesive sheet of this example was obtained.
Fluorine coating composition (manufactured by DAIKIN Co., Ltd. under the trade mark of ZEFFLE, Product No. LC550, solid content: 60 wt%): 63.7 wt%
Curing agent (manufactured by TAKEDA CHEMICAL INDUSTRIES Co., Ltd. under the trade mark of TAKENATE, Product No. D140N, 75 wt% of isocyanate/25 wt% of ethyl acetate): 24.8 wt%
Agent for imparting hydrophilicity (fluorine-containing compound manufactured by DAIKIN INDUSTRIES Co., Ltd., Product No. GH-100): 11.5 wt%

The adhesive sheet of this example was evaluated in the same manner as in Example 1. The evaluation results are shown in Table 1.

### Comparative Example 2

An adhesive sheet of this example was made without providing a protective layer on the adhesive sheet used in Example 1. In the same manner as in Example 1, the resulting adhesive sheet was evaluated. The evaluation results are shown in Table 1.

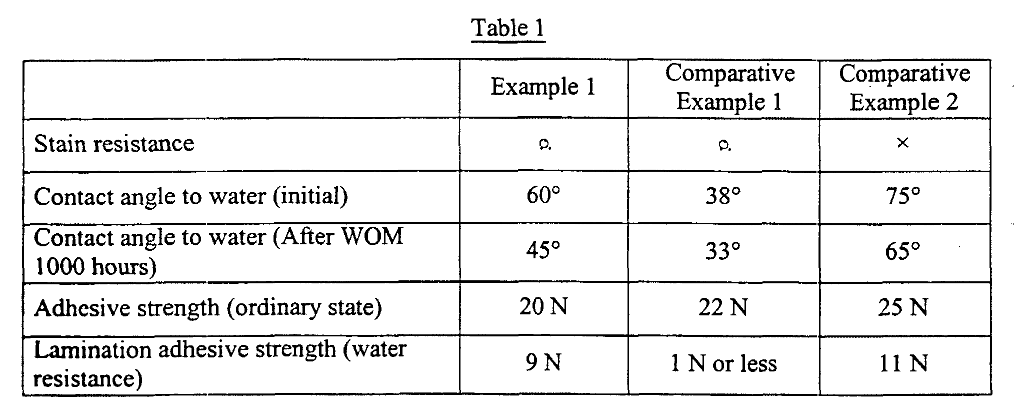

As is apparent from Table 1, the adhesive sheet of the present invention is superior in stain resistance and is also superior in adhesion with the second adhesive sheet bonded to the adhesive sheet. On the other hand, since the used hydrophilizing agent in the protective layer is not an inorganic oxide or an organosilicate compound, but is a fluorine compound in Comparative Example 1, the contact angle to water is small and the hydrophilicity is superior. As a result, the stain resistance is superior but the water-resistant adhesive strength of the second adhesive sheet is low. On the other hand, since no hydrophilizing is used in the protective layer in Comparative Example 2, the contact angle to water is large, that is, the hydrophilicity is poor. As a result, the second adhesive sheet is superior in water-resistant adhesive strength but is inferior in stain resistance.

When using the adhesive sheet as a first adhesive sheet to be applied on the surface of an adherend, peel of a second adhesive sheet laminated thereon can be effectively prevented, as described above. On the other hand, the surface of a protective layer on which the second adhesive sheet is not bonded can maintain the stain resistance satisfactorily for a long period of time. Therefore, the adhesive sheet according to the present invention can be suited for use as an outdoor adhesive sheet.

## Claims

1. An adhesive sheet comprising a flexible substrate, an adhesive layer disposed on the back surface of said flexible substrate, and a protective layer disposed on the surface of said flexible substrate, **characterized in that**:
said protective layer contains (1) a cured resin, and (2) a hydrophilizing agent of an inorganic oxide, an organosilane compound or a mixture thereof; and that the thickness of said protective layer is from 0.1 to 60 µm and the contact angle between the surface of said protective layer and water is from 35 to 65 degrees.

2. An adhesion structure comprising a first adhesive sheet of the adhesive sheet of claim 1, the surface of an adherend being covered with said first adhesive sheet, and a second adhesive sheet disposed on the surface of said protective layer of said first adhesive sheet, the surface of said protective layer being partially covered with said second adhesive sheet.

3. The adhesion structure according to claim 2, wherein the protective layer of the first adhesive sheet contains an acrylic polymer and the second adhesive sheet is bonded to the protective layer of the first adhesive sheet through an adhesive layer containing an acrylic adhesive.

## Patentansprüche

1. Klebefilm, umfassend ein flexibles Substrat, eine Klebeschicht, die auf der rückseitigen Oberfläche des flexiblen Substrats aufgebracht ist, und eine Schutzschicht, die auf der Oberfläche des flexiblen Substrats aufgebracht ist, **dadurch gekennzeichnet dass**:
die Schutzschicht (1) ein gehärtetes Harz und (2) ein hydrophilisierendes Mittel aus einem anorganischen Oxid, einer Organosilanverbindung oder einem Gemisch davon enthält; und dass die Dicke der Schutzschicht 0,1 bis 60 µm beträgt und der Kontaktwinkel zwischen der Oberfläche der Schutzschicht und Wasser 35 bis 65 Grad beträgt.

2. Klebestruktur, umfassend einen ersten Klebefilm aus dem Klebefilm nach Anspruch 1, wobei die Oberfläche eines Klebegebildes mit dem ersten Klebefilm bedeckt ist, und einen zweiten Klebefilm, der auf der Oberfläche der Schutzschicht des ersten Klebefilms aufgebracht ist, wobei die Oberfläche der Schutzschicht teilweise mit dem zweiten Klebefilm bedeckt ist.

3. Klebestruktur nach Anspruch 2, wobei die Schutzschicht des ersten Klebefilms ein Acrylpolymer enthält und der zweite Klebefilm an die Schutzschicht des ersten Klebefilms durch eine Klebeschicht, die einen Acrylkleber enthält, gebunden ist.

## Revendications

1. Feuille adhésive comprenant un substrat flexible, une couche adhésive disposée sur la surface postérieure dudit substrat flexible, et une couche protectrice disposée sur la surface dudit substrat flexible, **caractérisée en ce que** :
ladite couche protectrice contient (1) une résine durcie, et (2) un agent hydrophilisant constitué d'un oxyde inorganique, d'un composé organosilane ou d'un mélange de ceux-ci ; et **en ce que** l'épaisseur de ladite couche protectrice est de 0,1 à 60 µm et l'angle de contact entre la surface de ladite couche protectrice et l'eau est de 35 à 65 degrés.

2. Structure d'adhésion comprenant une première feuille adhésive constituée de la feuille adhésive selon la revendication 1, la surface d'une pièce à coller étant recouverte par ladite première feuille adhésive, et une deuxième feuille adhésive disposée sur la surface de ladite couche protectrice de ladite première feuille adhésive, la surface de ladite couche protectrice étant recouverte en partie par ladite deuxième feuille adhésive.

3. Structure d'adhésion selon la revendication 2, dans laquelle la couche protectrice de la première feuille adhésive contient un polymère acrylique et la deuxième feuille adhésive est collée à la couche protectrice de la première feuille adhésive par une couche adhésive contenant un adhésif acrylique.
